# EUROPEAN PATENT SPECIFICATION

(11) **EP 4 050 163 B1**
(45) Date of publication and mention of the grant of the patent: **27.08.2025**
(21) Application number: 20904790.1
(22) Date of filing: 08.10.2020
(51) Int. Cl.: E02F 9/20, E02F 9/26, G09B 9/042, G09B 9/048, G09B 19/16, E02F 3/43

(54) **WORK ASSISTING SERVER, WORK ASSISTING METHOD, AND WORK ASSISTING SYSTEM**
ARBEITSASSISTENZSERVER, ARBEITSASSISTENZVERFAHREN UND ARBEITSASSISTENZSYSTEM
SERVEUR D'AIDE AU TRAVAIL, PROCÉDÉ D'AIDE AU TRAVAIL, ET SYSTÈME D'AIDE AU TRAVAIL

(30) Priority: 24.12.2019 JP 2019233255
(43) Date of publication of application: 31.08.2022
(73) Proprietor: KOBELCO CONSTRUCTION MACHINERY CO., LTD., Hiroshima-shi, Hiroshima 731-5161 (JP)
(72) Inventor: OTANI Masaki, Hiroshima-shi, Hiroshima 731-5161 (JP); SAIKI Seiji, Hiroshima-shi, Hiroshima 731-5161 (JP); YAMAZAKI Yoichiro, Hiroshima-shi, Hiroshima 731-5161 (JP)
(74) Representative: Schön, Christoph
(86) International application number: PCT/JP2020/038200
(87) International publication number: WO 2021/131228

(56) References cited:
- DE-A1- 102013 011 818
- DE-A1- 102016 000 351
- DE-U1- 202016 002 295
- JP-A- 2015 040 422
- JP-A- 2019 207 570
- US-A1- 2008 180 523

## Description

### Technical Field

The present invention relates to a work assisting server for assisting an improvement in operation techniques of a work machine by an operator based on communication with a client.

### Background Art

A display device for a construction machine has been suggested, the display device being capable of encouraging an inexperienced operator to perform an optimal operation which brings efficient excavation work (for example, see Patent Literature 1). Specifically, while being associated with respective operation amounts of a first operation unit which operates a tractive force of a vehicle body and a second operation unit which commands and operates a work instrument in a vehicle-body front portion, "a target tractive force value", "a tractive force value in actual excavation work with respect to a target lifting force value", and "a lifting force value", which are in advance set, in excavation work are displayed while being compared with each other. Accordingly, it is intended to encourage an operator to improve fuel efficiency and to perform an operation with high work efficiency in work at each of phases (traveling of a vehicle and a lift by a work instrument). A device according to the prior art is disclosed in DE 20 2016 002295 U1.

### Citation List

### Patent Literature

[Patent Literature 1] Japanese Patent Laid-Open No. 2015-040422

### Summary of Invention

### Technical Problem

However, in view of an improvement in operation techniques, it is preferable that an operator having little experience in operating work machines gain experience in operation by simulations while referring to situations where skilled operators or the like operate work machines.

Accordingly, an object of the present invention is to provide a server and so forth that enable an operator to gain experience in operation by a simulation while referring to a situation of an operation of a work machine by the operator himself/herself or another operator.

### Solution to Problem

The present invention relates to a work assisting server for assisting an improvement in operation techniques of a work machine by an operator based on communication with a client.

A work assisting server of the present invention includes: a first assisting process element that recognizes a time series of captured images which are acquired through an image-capturing device cooperating with a first work machine based on communication with a first client used by a first operator for operating the first work machine and which represent an action manner and an environment changing manner of the first work machine and that causes a time series of work environment images which correspond to the captured images to be accumulatively stored and retained in a database; and a second assisting process element that causes an output interface of a second client to output a time series of designated work environment images, which are designated through an input interface of the second client, among time series of the work environment images which are stored and retained in the database based on communication with the second client and that causes the output interface of the second client to output a time series of simulation images which represent an action manner and an environment changing manner of a second work machine at a virtual work site, the action manner and the environment changing manner corresponding to a simulation operation by a second operator through the input interface of the second client, based on a designated work environment image at one designated time point, which is designated through the input interface of the second client, in the time series of the designated work environment images.

A work assisting system of the present invention includes: the work assisting server of the present invention; the first client; and the second client.

In the work assisting server and the work assisting system (hereinafter, appropriately referred to as "the work assisting server and so forth") of the present invention, the second operator can designate, through the input interface of the second client, one time series of the work environment images from archives of times series of the work environment images or movies that are registered in the database and that correspond to the captured images which represent an operation manner, the action manner, and the environment changing manner of the first work machine by the first operator. As for the time series of the work environment images, for example, a time series of work environment images throughout a period from an execution start time point when the first work machine starts executing a designated task to an execution finishing time point may be defined as a unit which configures an archive. The second operator can browse the time series of the designated work environment images through the output interface of the second client. The first operator may be the same operator as the second operator, that is, the second operator himself/herself in addition to another operator who is different from the second operator.

The second operator can, through the input interface of the second client, designate the designated work environment image at one designated time point in the time series of the designated work environment images and can perform a simulation operation of the second work machine at the virtual work site that is based on the designated work environment image at the designated time point. The second operator can cause the output interface of the second client to output the time series of the simulation images which represent the action manner and the environment changing manner of the second work machine at the virtual work site in accordance with the simulation operation manner.

As described above, the second operator browses a time series of the designated work environment images which can be used as a suitable reference, then designates a designated work environment image, which can be used as a more suitable reference, from the time series of the designated work environment images, performs a simulation operation of the second work machine at the virtual work site which is reproduced based on the designated work environment images, and can thereby intend an improvement in operation techniques of the work machine.

### Brief Description of Drawings

FIG. 1 is an explanatory diagram about a configuration of a work assisting system as one embodiment of the present invention.
FIG. 2 is an explanatory diagram about a configuration of a remote operation device.
FIG. 3 is an explanatory diagram about a configuration of a work machine.
FIG. 4 is an explanatory diagram about a first function of the work assisting system.
FIG. 5 is an explanatory diagram about a second function of the work assisting system.
FIG. 6 is an explanatory diagram about a time series of work environment images.
FIG. 7 is an explanatory diagram about a time series of simulation images.

### Description of Embodiments

### (Configuration of Work Assisting System)

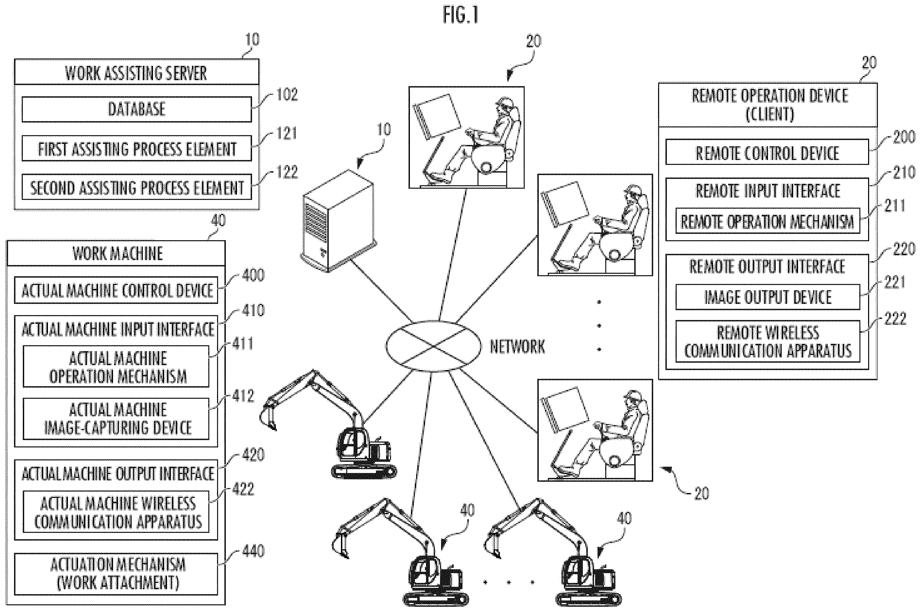

A work assisting system as one embodiment of the present invention, which is illustrated in FIG. 1, is configured with a work assisting server 10 and plural remote operation devices 20 for performing remote operations of plural work machines 40. The work assisting server 10, the remote operation devices 20, and the work machines 40 are configured to be capable of mutual network communication.

### (Configuration of Work Assisting Server)

The work assisting server 10 includes a database 102, a first assisting process element 121, and a second assisting process element 122. The database 102 stores and retains captured images, work environment images, route guiding images, and so forth in addition to positions and tracks of each of the plural work machines 40. The database 102 may be configured with a database server separate from the work assisting server 10. Each of the assisting process elements is configured with an arithmetic processing unit (a single-core processor or a multi-core processor or a processor core configuring that), reads necessary data and software from a storage device such as a memory, and executes a computation process following the software for the data as a target, the computation process being described later.

### (Configuration of Remote Operation Device)

The remote operation device 20 which configures a client includes a remote control device 200, a remote input interface 210, and a remote output interface 220. The remote control device 200 is configured with an arithmetic processing unit (a single-core processor or a multi-core processor or a processor core configuring that), reads necessary data and software from a storage device such as a memory, and executes a computation process following the software for the data as a target. The remote input interface 210 includes a remote operation mechanism 211. The remote output interface 220 includes an image output device 221 and a remote wireless communication apparatus 222.

The client may be configured with a portable terminal which cooperates with the remote operation device 20 or has a mutual communication function. The portable terminal may have a communication function to communicate with the work assisting server 10.

The remote operation mechanism 211 includes a traveling operation device, a revolution operation device, a boom operation device, an arm operation device, and a bucket operation device. Each of the operation devices has operation levers which accept a rotation operation. An operation lever (traveling lever) of the traveling operation device is operated to move a lower traveling body 41 of the work machine 40. The traveling lever may also have a traveling pedal. For example, a traveling pedal may be provided which is fixed to a base portion or a lower end portion of the traveling lever. An operation lever (revolution lever) of the revolution operation device is operated to move a hydraulic revolution motor which configures a revolution mechanism 43 of the work machine 40. An operation lever (boom lever) of the boom operation device is operated to move a boom cylinder 442 of the work machine 40. An operation lever (arm lever) of the arm operation device is operated to move an arm cylinder 444 of the work machine 40. An operation lever (bucket lever) of the bucket operation device is operated to move a bucket cylinder 446 of the work machine 40.

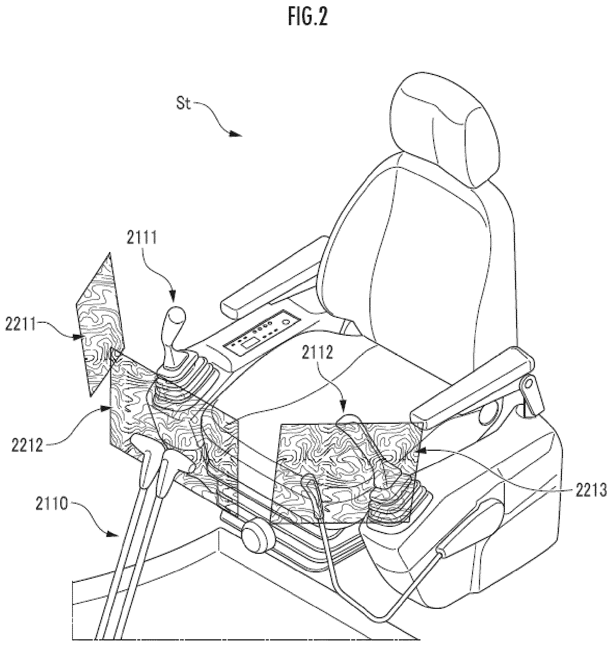

As illustrated in FIG. 2, the operation levers configuring the remote operation mechanism 211 are arranged around a seat St on which an operator is seated, for example. The seat St is in a form of a high-back chair with armrests but may be in an arbitrary form on which the operator can be seated such as a form of a low-back chair without a headrest or a form of a chair without a backrest.

A pair of left and right traveling levers 2110 corresponding to left and right continuous tracks are arranged laterally side by side in a left-right direction in front of the seat St. One operation lever may be used as plural operation levers. For example, a right operation lever 2111 provided in front of a right frame of the seat St, which is illustrated in FIG. 2, may function as the boom lever in a case where the right operation lever 2111 is operated in a front-rear direction and may function as the bucket lever in a case where the right operation lever 2111 is operated in the left-right direction. Similarly, a left operation lever 2112 provided in front of a left frame of the seat St, which is illustrated in FIG. 2, may function as the arm lever in a case where the left operation lever 2112 is operated in the front-rear direction and may function as the revolution lever in a case where the left operation lever 2112 is operated in the left-right direction. Lever patterns may arbitrarily be changed by an operation instruction from the operator.

As illustrated in FIG. 2, the image output device 221 is configured with an obliquely right front image output device 2211, a front image output device 2212, and an obliquely left front image output device 2213 which are respectively arranged in obliquely right front, in front, and in obliquely left front of the seat St, for example. The image output devices 2211 to 2213 may further include a speaker (sound output device).

### (Configuration of Work Machine)

The work machine 40 includes an actual machine control device 400, an actual machine input interface 410, an actual machine output interface 420, and an actuation mechanism 440. The actual machine control device 400 is configured with an arithmetic processing unit (a single-core processor or a multi-core processor or a processor core configuring that), reads necessary data and software from a storage device such as a memory, and executes a computation process following the software for the data as a target.

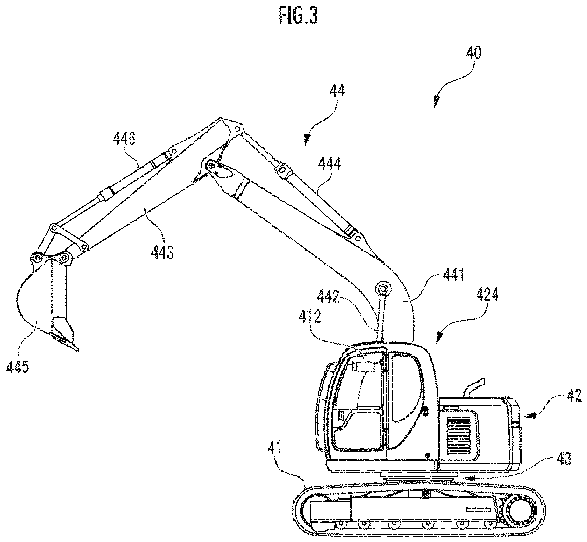

The work machine 40 is a crawler excavator (construction machine), for example, and includes, as illustrated in FIG. 3, a crawler type lower traveling body 41 and an upper revolving body 42 which is revolvably mounted on the lower traveling body 41 via the revolution mechanism 43. A cab (operator cab) 424 is provided to a front left side portion of the upper revolving body 42. A work attachment 44 is provided to a front central portion of an upper revolving body 42.

The actual machine input interface 410 includes an actual machine operation mechanism 411 and an actual machine image-capturing device 412. The actual machine operation mechanism 411 includes plural operation levers, which are arranged similarly to the remote operation mechanism 211, around a seat arranged in an internal portion of the cab 424. A drive mechanism or a robot, which receives a signal corresponding to an operation manner of remote operation levers and moves actual machine operation levers based on the received signal, is provided to the cab 424. The actual machine image-capturing device 412 is installed in the internal portion of the cab 424, for example, and captures an image of an environment including at least a part of the actuation mechanism 440 through a front window of the cab 424.

The actual machine output interface 420 includes an actual machine wireless communication apparatus 422.

The work attachment 44 as the actuation mechanism includes a boom 441 which is attached to the upper revolving body 42 to be capable of derricking, an arm 443 which is rotatably coupled with a distal end of the boom 441, and a bucket 445 which is rotatably coupled with a distal end of the arm 443. To the work attachment 44, the boom cylinder 442, the arm cylinder 444, and the bucket cylinder 446 which are configured with hydraulic cylinders capable of extending and contracting are attached.

The boom cylinder 442 is interposed between the boom 441 and the upper revolving body 42 such that the boom cylinder 442 extends and contracts by being supplied with hydraulic oil so as to rotate the boom 441 in a derricking direction. The arm cylinder 444 is interposed between the arm 443 and the boom 441 such that the arm cylinder 444 extends and contracts by being supplied with hydraulic oil so as to rotate the arm 443 around a horizontal axis with respect to the boom 441. The bucket cylinder 446 is interposed between the bucket 445 and the arm 443 such that the bucket cylinder 446 extends and contracts by being supplied with hydraulic oil so as to rotate the bucket 445 around a horizontal axis with respect to the arm 443.

### (Functions)

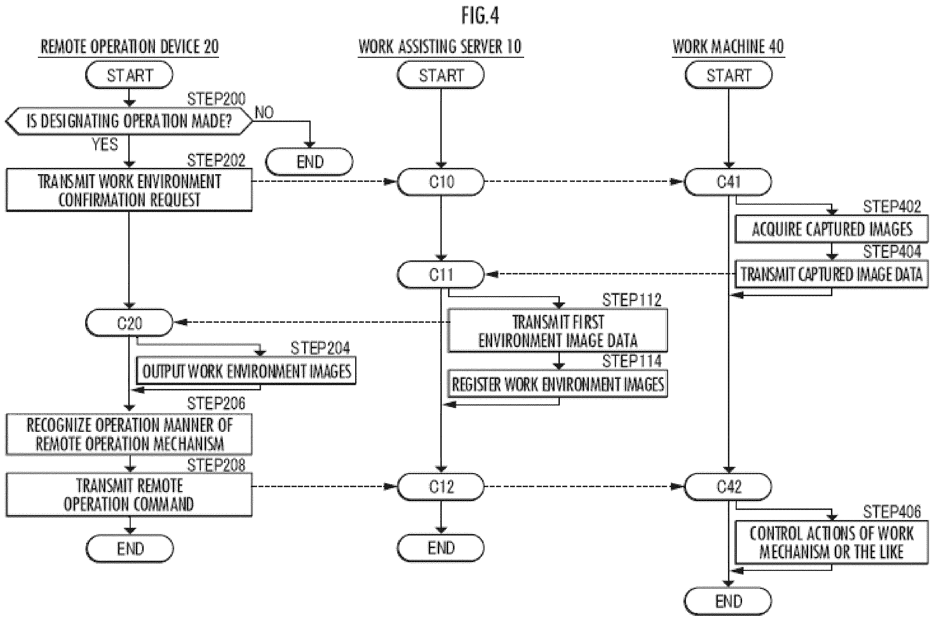

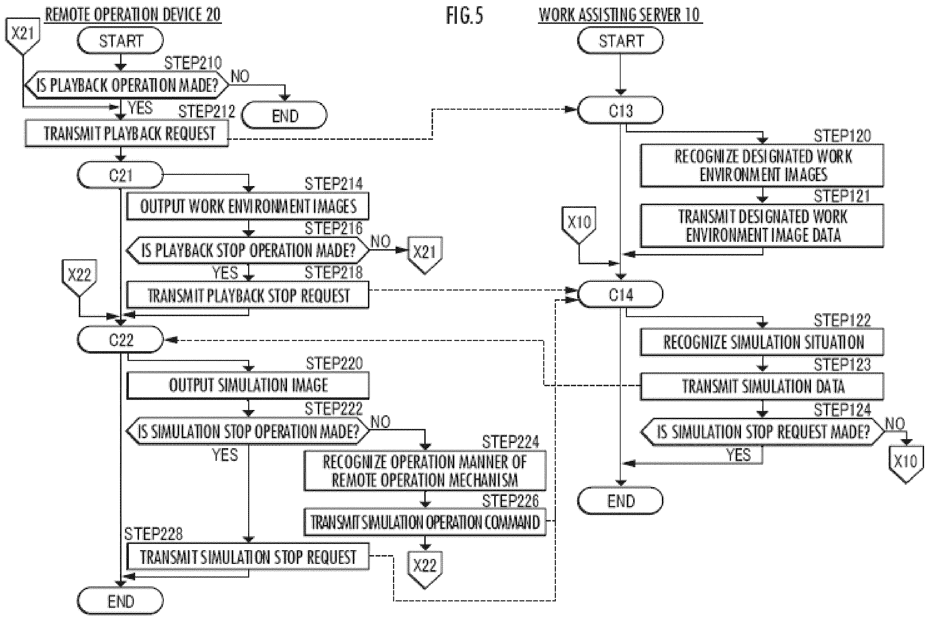

Functions of the work assisting system in the above configuration will be described by using flowcharts illustrated in FIG. 4 and FIG. 5. In the flowcharts, a block indicated by "CXX" is used for simplification of descriptions, denotes transmission and/or reception of data, and denotes a conditional branch where a process in a branching direction is executed while transmission and/or reception of the data are used as a condition.

"Recognition" of information by configuration elements (arithmetic processing resources or hardware resources) of the present invention represents a concept encompassing processes for preparing the information in all forms in which the information is usable in subsequent processes, such as receiving the information, reading out or searching for the information from storage devices and so forth, writing or registering the information (causing the information to be stored or retained) in storage devices and so forth, and estimating, determining, identifying, measuring, and predicting, and so forth the information by executing a computation process of basic information following a predetermined algorithm, the basic information being obtained by an output signal and/or reception from a sensor, a search, and so forth.

### (First Function (Registration of Work Environment Images))

The remote operation device 20 as a first client determines whether or not a designating operation through the remote input interface 210 by the operator is made (STEP 200 in FIG. 4). A "designating operation" is an operation for selecting the work machine 40 which cooperates with the remote operation device 20 and is a touch operation such as tapping, swiping, flicking, pinching out, or pinching in on a touch panel which configures the remote input interface 210, for example. The touch panel displays an actual machine image of the work machine 40 which can become a target of a remote operation, for example, and it is determined whether or not an operation is made to a display position of the actual machine image in the touch panel. In a case where the determination result is a negative result such as interruption of the designating operation (NO in STEP 200 in FIG. 4), a series of processes is finished. On the other hand, in a case where the determination result is affirmative (YES in STEP 200 in FIG. 4), a work environment image request for requesting captured images necessary for an operation of the work machine 40 which cooperates with the remote operation device 20 is transmitted to the work assisting server 10 through the remote wireless communication apparatus 222 (STEP 202 in FIG. 4). The work environment image request includes at least one of an identifier of the remote operation device 20 and an identifier of the operator.

In a case where the work assisting server 10 receives the work environment image request, the first assisting process element 121 transmits the work environment image request to the concerned work machine 40 (C10 in FIG. 4).

In a case where the work machine 40 receives the work environment image request through the actual machine wireless communication apparatus 422 (C41 in FIG. 4), the actual machine control device 400 acquires captured images through the actual machine image-capturing device 412 (STEP 402 in FIG. 4). The actual machine control device 400 transmits captured image data which represent the captured images to the work assisting server 10 through the actual machine wireless communication apparatus 422 (STEP 404 in FIG. 4).

In a case where the work assisting server 10 receives the captured image data (C11 in FIG. 4), work environment image data (data which represent all or a part of the captured images themselves or simulated work environment images generated based on those) corresponding to the captured image data are transmitted to the remote operation device 20 (STEP 112 in FIG. 4). Further, a time series of the work environment image data is registered in or stored and retained in the database 102 (STEP 114 in FIG. 4).

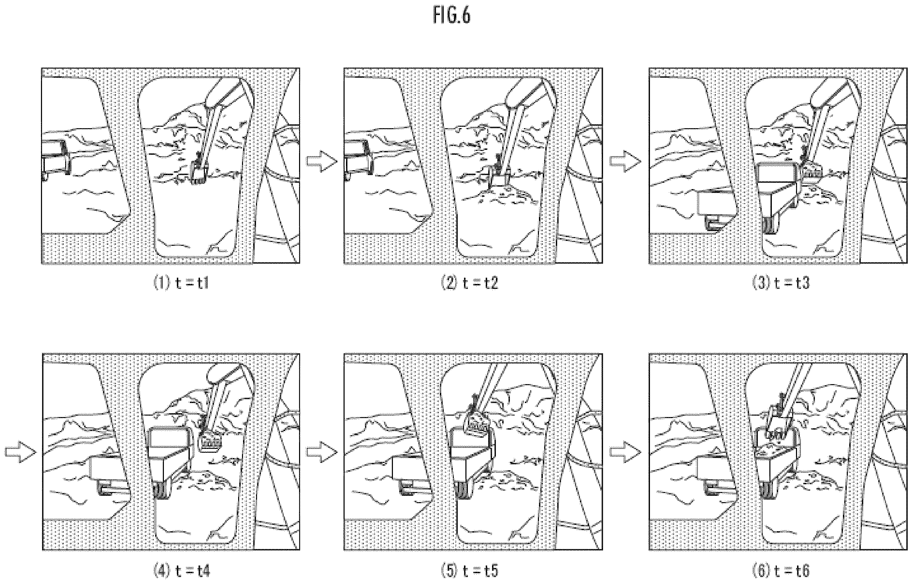

In a case where the remote operation device 20 receives the work environment image data through the remote wireless communication apparatus 222 (C20 in FIG. 4), the work environment images corresponding to the work environment image data are output to the image output device 221 (STEP 204 in FIG. 4). Accordingly, for example, as illustrated in FIG. 6, the work environment image, which includes the boom 441, the arm 443, the bucket 445, and the arm cylinder 444 as a part of the work attachment 44 as the actuation mechanism whose image is captured by the actual machine image-capturing device 412 mounted on the work machine 40 which cooperates with the remote operation device 20, is displayed on the image output device 221.

In the remote operation device 20, an operation manner of the remote operation mechanism 211 is recognized by the remote control device 200 (STEP 206 in FIG. 4), and a remote operation command corresponding to the operation manner is transmitted to the work assisting server 10 through the remote wireless communication apparatus 222 (STEP 208 in FIG. 4).

In a case where the work assisting server 10 receives the remote operation command, the first assisting process element 121 transmits the remote operation command to the work machine 40 (C12 in FIG. 4).

In a case where in the work machine 40, the actual machine control device 400 receives an operation command through the actual machine wireless communication apparatus 422 (C42 in FIG. 4), actions of the work attachment 44 or the like are controlled (STEP 406 in FIG. 4). For example, work is executed in which earth in front of the work machine 40 is scooped by the bucket 445, the upper revolving body 42 is revolved, and earth is then dropped from the bucket 445 (see FIG. 6). As illustrated in FIG. 6, in the above work, the work environment image (a movie or intermittent still images) at a time point t = tk (k = 1, 2, 3, 4, 5, 6), for example, is displayed on the image output device 221. The work environment image at t = t1 represents a situation where immediately after the bucket 445 is moved to an excavation start position, the work attachment 44 is extended forward, and the bucket 445 is pushed to the ground. The work environment image at t = t2 represents a situation where an operation to move the arm 443 to a position closer to the work machine 40 is performed. The work environment image at t = t3 represents a situation where sufficient earth and sand enter the bucket 445 and the bucket 445 is thereafter caused to take a retainment posture in which earth is grasped. The work environment image at t = t4 represents a situation where left revolution is performed while an operation to raise the boom 441 is performed. The work environment image at t = t5 represents a situation where an operation to move the arm 443 away is performed after the left revolution and the bucket 445 is positioned right above an earth discharging position. The work environment image at t = t6 represents a situation where the bucket takes an earth discharging posture and earth falls from the bucket 445.

### (Second Function (Output of Simulation Images)

The remote operation device 20 as a second client determines whether or not a playback operation through the remote input interface 210 by the operator is made (STEP 210 in FIG. 5). A "playback operation" includes a touch operation for designating one work environment image from a library of the work environment images, the library being registered in the database 102 and displayed on a touch panel, the touch panel configuring the remote input interface 210 and the remote output interface 220, for example. A start of playback, a stop of playback, a temporary stop of playback, fast-forwarding, and rewinding of the work environment images are made possible by a remote input interface 210.

In a case where the determination result is negative (NO in STEP 210 in FIG. 5), a series of processes is finished. On the other hand, in a case where the determination result is affirmative (YES in STEP 210 in FIG. 5), a playback request is transmitted to the work assisting server 10 through the remote wireless communication apparatus 222 (STEP 212 in FIG. 5). The playback request accompanying the playback operation includes an image identifier for identifying the work environment image designated by the operator.

In a case where the work assisting server 10 receives the playback request (C13 in FIG. 5), the second assisting process element 122 searches for a time series of the work environment images, which is a playback target, as a time series of a designated work environment images from the database 102 based on the image identifiers included in the playback request (STEP 120 in FIG. 5).

The second assisting process element 122 transmits data which represent a time series of designated work environment images to the remote operation device 20 (STEP 121 in FIG. 5).

In a case where the remote operation device 20 receives the work environment image data through the remote wireless communication apparatus 222 (C21 in FIG. 5), the work environment images corresponding to the work environment image data are played back in or output to the image output device 221 (STEP 214 in FIG. 5). Accordingly, for example, as illustrated in FIG. 6, the respective work environment images (a movie or intermittent still images) at different time points t = t1, t2, t3, t4, t5, and t6, the work environment images including the boom 441, the arm 443, the bucket 445, and the arm cylinder 444 as a part of the work attachment 44 as the actuation mechanism, are displayed on the image output device 221 in a time-series manner.

The remote control device 200 determines whether or not a playback stop operation through an operation by the remote input interface 210 is made (STEP 216 in FIG. 5).

In a case where the determination result is negative (NO in STEP 216 in FIG. 5), a playback request without the playback operation is transmitted to the work assisting server 10 through the remote wireless communication apparatus 222. As a result, the time series of the work environment images is continuously output on the image output device 221 (see STEP 212 → C13 → STEP 120 → STEP 121 → C21 → STEP 214 in FIG. 5).

On the other hand, in a case where the determination result is affirmative (YES in STEP 216 in FIG. 5), the remote control device 200 transmits a playback stop request to the work assisting server 10 through the remote wireless communication apparatus 222 which configures the remote output interface 220 (STEP 218 in FIG. 5). In this case, because the playback request without the playback operation is not transmitted to the work assisting server 10, as a result, a playback of the time series of the work environment images on the image output device 221 is stopped. The playback stop request includes a playback stop time point of the time series of the work environment images as a designated time point.

In a case where the work assisting server 10 receives the playback stop request (C14 in FIG. 5), the second assisting process element 122 recognizes a simulation situation based on the work environment image at the designated time point included in the playback stop request (STEP 122 in FIG. 5). For example, an action manner and an environment changing manner of the work machine (second work machine) at a virtual work site, which correspond to the work environment image at a designated time point t = tk in the time series of the work environment images illustrated in FIG. 6, are recognized as the simulation situation.

In addition, the second assisting process element 122 transmits simulation image data which represent the simulation situation to the remote operation device 20 (STEP 123 in FIG. 5).

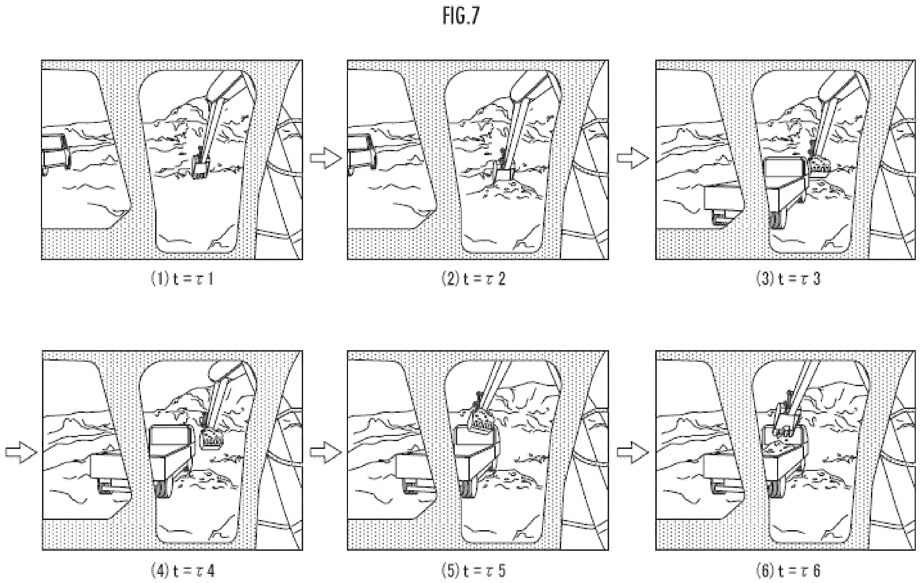

In a case where in the remote operation device 20, the simulation image data are received by the remote wireless communication apparatus 222 which configures the remote output interface 220 (C22 in FIG. 5), a simulation image is output on the image output device 221 which configures the remote output interface 220 (STEP 220 in FIG. 5). Accordingly, for example, a simulation image, which represents the action manner and the environment changing manner of the work machine (second work machine) at the virtual work site at a time point t = τj (j = 1, 2, ...) indicated in FIG. 7, is output on the image output device 221. In this case, the image output device 221 may output a simulation image instead of the work environment image in a stop state and may output the work environment image in the stop state in a corner of the simulation image.

The remote control device 200 determines whether or not a simulation stop operation through the remote input interface 210 is made (STEP 222 in FIG. 5).

In a case where the determination result is affirmative (YES in STEP 222 in FIG. 5), the remote control device 200 transmits a simulation stop request to the work assisting server 10 through the remote wireless communication apparatus 222 (STEP 228 in FIG. 5).

On the other hand, in a case where the determination result is negative (NO in STEP 222 in FIG. 5), the remote control device 200 recognizes the operation manner of the remote operation mechanism 211 (STEP 224 in FIG. 5), and a simulation operation command corresponding to the operation manner is transmitted to the work assisting server 10 through the remote wireless communication apparatus 222 (STEP 226 in FIG. 5).

In a case where the work assisting server 10 receives the simulation operation command (C14 in FIG. 5), the second assisting process element 122 recognizes the simulation situation corresponding to the simulation operation command (STEP 122 in FIG. 5). For example, in a case where the operation manner of the remote operation mechanism 211 is to realize a situation where the boom 441 is caused to rise with respect to the upper revolving body 42 and the whole work attachment 44 is thereby caused to rise, a situation where the work attachment 44 acts in such a way in a simulation is recognized as the simulation situation.

The second assisting process element 122 transmits data which represent simulation images to the remote operation device 20 (STEP 123 in FIG. 5). Then, the second assisting process element 122 determines whether or not the simulation stop request is made (STEP 124 in FIG. 5). In a case where the determination result is affirmative (YES in STEP 124 in FIG. 5), a series of processes is finished. In a case where the determination result is negative (NO in STEP 124 in FIG. 5), processes subsequent to reception of the simulation operation command are repeated (see C14 → STEP 122 → STEP 123 in FIG. 5).

In a case where in the remote operation device 20, the simulation image data are received by the remote wireless communication apparatus 222 which configures the remote output interface 220 (C22 in FIG. 5), a simulation image is output on the image output device 221 which configures the remote output interface 220 (STEP 220 in FIG. 5). Accordingly, for example, a simulation image at a time point t = τj (j = 1, 2, ...) indicated in FIG. 7 is output on the image output device 221.

The work environment image at t = τ1 represents, as a simulation image, a situation where immediately after the bucket 445 is moved to an excavation start position, the work attachment 44 is extended forward, and the bucket 445 is pushed to the ground. The work environment image at t = τ2 represents, as a simulation image, a situation where an operation to move the arm 443 to a position closer to the work machine 40 is performed. The work environment image at t = τ3 represents, as a simulation image, a situation where sufficient earth and sand enter the bucket 445 and the bucket 445 is thereafter caused to take a retainment posture in which earth is grasped. The work environment image at t = τ4 represents, as a simulation image, a situation where left revolution is performed while an operation to raise the boom 441 is performed. The work environment image at t = τ5 represents, as a simulation image, a situation where an operation to move the arm 443 away is performed after the left revolution and the bucket 445 is positioned right above an earth discharging position. The work environment image at t = τ6 represents, as a simulation image, a situation where the bucket takes an earth discharging posture and earth falls from the bucket 445.

### (Effects)

In the work assisting system in the above configuration and the work assisting server 10 configuring that, a time series of the work environment images representing an action manner and an environment changing manner of a first work machine, the first work machine being remotely operated by a first operator through the remote operation device 20 which configures the first client, is registered in the database 102 (see STEP 114 in FIG. 4). Accordingly, archives of time series of various work environment images are accumulated and preserved in the database 102. A "first work machine" denotes the work machine 40 which is remotely operated by the first operator and executes work at an actual work site.

A second operator of the remote operation device 20 configuring the second client can designate one time series of the work environment images from the archives registered in the database 102 through the remote input interface 210 (see STEP 210 in FIG. 5). Accordingly, the second operator can browse the time series of the designated work environment images on the remote output interface 220 (see STEP 220 in FIG. 5 and FIG. 7).

The second operator can perform a simulation operation of the second work machine at a virtual work site that is based on the designated work environment images, through the remote operation mechanism 211 which configures the remote input interface 210 (see FIG. 5). A "second work machine" denotes a work machine which is subjected to a simulation operation by the second operator and is actuated at a virtual work site. The second operator can cause the remote output interface 220 to output a time series of the simulation images which represent the action manner and the environment changing manner of the work machine at the virtual work site in accordance with the simulation operation manner (see STEP 224 → STEP 226 → C14 → STEP 122 → STEP 123 → STEP 124 → C22 → STEP 220 in FIG. 5 and FIG. 7).

As described above, the second operator browses a time series of the work environment images which can be used as a suitable reference, then designates one work environment image, which can be used as a more suitable reference, from the time series of the work environment images, performs a simulation operation of the work machine at a virtual work site which is reproduced based on the designated work environment images, and can thereby intend an improvement in operation techniques of the work machine.

### (Other Embodiments of the Present Invention)

In the above embodiment, the work assisting server 10 is configured with one or plural servers which are separate from each of the remote operation devices 20 and the work machines 40 (see FIG. 1); however, as another embodiment, the work assisting server 10 may be a configuration element of the remote operation device 20 or the work machine 40. Each of the configuration elements 121 and 122 of the work assisting server 10 can be a configuration element of each of two or more apparatuses in the remote operation devices 20 and the work machines 40, the two or more apparatuses being capable of mutual communication.

Based on communication with the remote operation device 20 which configures the second client, the second assisting process element 122 may cause the remote output interface 220 which configures the remote operation device 20 to output time series, while superimposing the time series of the simulation images on the designated time series, which is subsequent to a designated time point, in the time series of the designated work environment images. The second operator can cause the remote output interface 220 to output the simulation images which represent the action manner and the environment changing manner of the second work machine at the virtual work site, while superimposing the simulation images on the designated time series of the work environment images which is subsequent to a designated time point, in accordance with the simulation operation manner through the remote operation mechanism 211.

Thus, the second operator is caused to recognize the difference between the action manner of the first work machine or the operation manner of the first operator and the environment changing manner, which are to be referred to, and the action manner of the second work machine or the simulation operation manner of the second operator and the environment changing manner at the virtual work site, and a further improvement in his/her operation techniques is intended.

The second assisting process element 122 may evaluate the difference between the action manner of the first work machine which is represented by the designated time series of the designated work environment images and the action manner of the second work machine which is represented by the time series of the simulation images. For example, an interval between designated parts (for example, the buckets 445) of the respective work attachments 44 of the first work machine and the second work machine may be converted into an actual spatial distance, and a cumulative value or a time average of the conversion results value may thereby be evaluated as the difference.

Furthermore, in a case where the difference exceeds a threshold value, the second assisting process element 122 may cause the remote output interface 220 to output information for confirming whether or not redoing of the simulation operation of the second work machine is necessary.

Accordingly, in a case where the difference between the action manner of the first work machine or the operation manner of the first operator and the environment changing manner and the action manner of the second work machine or the simulation operation manner of the second operator and the environment changing manner at the virtual work site exceeds the threshold value, because it is confirmed that the redoing is necessary through the remote input interface 210, a further improvement in operation techniques of the second operator is intended. Further, in a case where it is confirmed that the redoing is necessary, the remote output interface 220 may be caused to output a reproduction of the designated time series of the designated work environment images. Accordingly, because the second operator is capable of redoing the simulation operation, a further improvement in operation technique is intended.

Based on communication with the remote operation device 20 which configures the second client, the second assisting process element 122 may cause an operation state (for example, inclination angles or positions of the levers 2110, 2111, and 2112) of the remote operation mechanism 211 which configures the second client at a start time point of the simulation operation of the second work machine to agree with an operation state, at a designated time point, of the remote operation mechanism 211 of the remote operation device 20 which configures the first client.

Accordingly, the second operator can start the simulation operation of the second work machine while using, as a starting point, an operation state of the remote operation mechanism 211 of the remote operation device 20 configuring the second client, the operation state agreeing with an operation state, by the first operator, of the remote operation mechanism 211 of the remote operation device 20 configuring the first client. Thus, easiness of learning of the operation techniques of the first operator by the second operator is improved, and a further improvement in operation techniques of the second operator is intended.

### Reference Signs List

- 10: work assisting server
- 20: remote operation device (first client, second client)
- 40: work machine
- 102: database
- 121: first assisting process element
- 122: second assisting process element
- 210: remote input interface
- 220: remote output interface
- 410: actual machine input interface
- 412: actual machine image-capturing device
- 420: actual machine output interface
- 440: work attachment (actuation mechanism)

## Claims

1. A work assisting server (10) for assisting an improvement in an operation technique of a work machine by an operator based on communication with a client, the work assisting server comprising:
a first assisting process element (121) that is configured to recognize a time series of captured images which are acquired through an image-capturing (412) device cooperating with a first work machine based on communication with a first client used by a first operator for operating the first work machine and which represent an action manner and an environment changing manner of the first work machine and that is configured to cause a time series of work environment images which correspond to the captured images to be accumulatively stored and retained in a database; and
a second assisting process element (122) that is configured to cause an output interface of a second client to output a time series of designated work environment images, which are designated through an input interface of the second client, among time series of the work environment images which are stored and retained in the database based on communication with the second client and that is configured to cause the output interface of the second client to output a time series of simulation images which represent an action manner and an environment changing manner of a second work machine at a virtual work site, the action manner and the environment changing manner corresponding to a simulation operation by a second operator through the input interface (210) of the second client, based on a work environment image at one designated time point, which is designated through the input interface of the second client, in the time series of the designated work environment images.

2. The work assisting server according to claim 1, wherein
the second assisting process element is configured to cause the output interface of the second client to output time series while superimposing the time series of the simulation images on a designated time series, which is subsequent to the designated time point, in the time series of the designated work environment images.

3. The work assisting server according to claim 2, wherein
in a case where a difference between the action manner of the first work machine which is represented by the designated time series of the designated work environment images and the action manner of the second work machine which is represented by the time series of the simulation images exceeds a threshold value, the second assisting process element is configured to cause the output interface of the second client to output information for confirming whether or not redoing of the simulation operation of the second work machine is necessary.

4. The work assisting server according to any one of claims 1 to 3, wherein
the first assisting process element is configured to recognize a time series of an operation state of a first operation mechanism which configures the first client based on communication with the first client, and
based on communication with the second client, the second assisting process element is configured to cause an operation state of a second operation mechanism which configures the second client at a start time point of the simulation operation of the second work machine to agree with the operation state of the first operation mechanism at a time point which corresponds to the one designated work environment image.

5. A work assisting system comprising:
the work assisting server according to any one of claims 1 to 4;
the first client; and
the second client.

6. A work assisting method for assisting an improvement in an operation technique of a work machine by an operator based on communication with a client, the work assisting method comprising:
executing a first assisting process of recognizing a time series of captured images which are acquired through an image-capturing device cooperating with a first work machine based on communication with a first client used by a first operator for operating the first work machine and which represent an action manner and an environment changing manner of the first work machine and of causing a time series of work environment images which correspond to the captured images to be accumulatively stored and retained in a database; and
executing a second assisting process of causing an output interface of a second client to output a time series of designated work environment images, which are designated through an input interface of the second client, among time series of the work environment images which are stored and retained in the database based on communication with the second client and of causing the output interface of the second client to output a time series of simulation images which represent an action manner and an environment changing manner of a second work machine at a virtual work site, the action manner and the environment changing manner corresponding to a simulation operation by a second operator through an input interface of the second client, based on a work environment image at one designated time point, which is designated through the input interface of the second client, in the time series of the designated work environment images.

## Patentansprüche

1. Arbeitsunterstützungsserver (10) zur Unterstützung einer Verbesserung bei der Bedienungstechnik einer Arbeitsmaschine durch einen Bediener auf Basis einer Kommunikation mit einem Client, wobei der Arbeitsunterstützungsserver Folgendes umfasst:
ein erstes unterstützendes Verarbeitungselement (121), das konfiguriert ist, eine Zeitreihe von aufgenommenen Bildern zu erkennen, die durch eine mit einer ersten Arbeitsmaschine zusammenarbeitende Bilderfassungsvorrichtung (412) auf Basis einer Kommunikation mit einem ersten Client, der von einem ersten Bediener zum Bedienen der ersten Arbeitsmaschine verwendet wird, erfasst werden und die eine Aktionsweise und eine Umgebungsänderungsweise der ersten Arbeitsmaschine darstellen, und das konfiguriert ist, zu veranlassen, dass eine Zeitreihe von Arbeitsumgebungsbildern, die den aufgenommenen Bildern entsprechen, in einer Datenbank kumulativ gespeichert und aufbewahrt wird, und
ein zweites unterstützendes Verarbeitungselement (122), das konfiguriert ist, eine Ausgabeschnittstelle eines zweiten Clients zu veranlassen, eine Zeitreihe von designierten Arbeitsumgebungsbildern, die durch eine Eingabeschnittstelle des zweiten Clients designiert sind, auf Basis der Kommunikation mit dem zweiten Client aus Zeitreihen von Arbeitsumgebungsbildern auszugeben, die in der Datenbank gespeichert und aufbewahrt sind, und das konfiguriert ist, die Ausgabeschnittstelle des zweiten Clients zu veranlassen, eine Zeitreihe von Simulationsbildern, die eine Aktionsweise und eine Umgebungsänderungsweise einer zweiten Arbeitsmaschine an einem virtuellen Arbeitsplatz darstellen, auszugeben, wobei die Aktionsweise und die Umgebungsänderungsweise einer Simulationsbedienung durch einen zweiten Bediener durch die Eingabeschnittstelle (210) des zweiten Clients entsprechen, und zwar basierend auf einem Arbeitsumgebungsbild zu einem designierten Zeitpunkt in der Zeitreihe der designierten Arbeitsumgebungsbilder, der durch die Eingabeschnittstelle des zweiten Clients designiert ist.

2. Arbeitsunterstützungsserver gemäß Anspruch 1, wobei das zweite unterstützende Verarbeitungselement konfiguriert ist, die Ausgabeschnittstelle des zweiten Clients zu veranlassen, Zeitreihen auszugeben, während die Zeitreihe der Simulationsbilder über eine designierten Zeitreihe, die auf den designierten Zeitpunkt folgt, bei der Zeitreihe der designierten Arbeitsumgebungsbilder überlagert wird.

3. Arbeitsunterstützungsserver gemäß Anspruch 2, wobei
in einem Fall, in dem ein Unterschied zwischen der Aktionsweise der ersten Arbeitsmaschine, die durch die designierte Zeitreihe der designierten Arbeitsumgebungsbilder dargestellt wird, und der Aktionsweise der zweiten Arbeitsmaschine, die durch die Zeitreihe der Simulationsbilder dargestellt wird, einen Schwellenwert überschreitet, das zweite unterstützende Verarbeitungselement konfiguriert ist, die Ausgabeschnittstelle des zweiten Clients zu veranlassen, Informationen auszugeben, um zu bestätigen, ob eine Wiederholung der Simulationsbedienung der zweiten Arbeitsmaschine erforderlich ist oder nicht erforderlich ist.

4. Arbeitsunterstützungsserver gemäß einem der Ansprüche 1 bis 3, wobei
das erste unterstützende Verarbeitungselement konfiguriert ist, eine Zeitreihe eines Bedienungszustands eines ersten Bedienungsmechanismus, der den ersten Client auf Basis der Kommunikation mit dem ersten Client konfiguriert, zu erkennen, und
auf Basis der Kommunikation mit dem zweiten Client das zweite unterstützende Verarbeitungselement konfiguriert ist, zu bewirken, dass ein Bedienungszustand eines zweiten Bedienungsmechanismus, der den zweiten Client konfiguriert, zu einem Startzeitpunkt der Simulationsbedienung der zweiten Arbeitsmaschine mit dem Bedienungszustand des ersten Bedienungsmechanismus zu einem Zeitpunkt übereinstimmt, der dem einen designierten Arbeitsumgebungsbild entspricht.

5. Arbeitsunterstützungssystem, umfassend:
den Arbeitsunterstützungsserver gemäß einem der Ansprüche 1 bis 4,
den ersten Client und
den zweiten Client.

6. Arbeitsunterstützungsverfahren zur Unterstützung einer Verbesserung bei einer Technik zum Bedienen einer Arbeitsmaschine durch einen Bediener auf Basis einer Kommunikation mit einem Client, wobei das Arbeitsunterstützungsverfahren folgende Schritte umfasst:
Ausführen eines ersten Unterstützungsverfahrens des Erkennens einer Zeitreihe von aufgenommenen Bildern, die durch eine mit einer ersten Arbeitsmaschine zusammenarbeitende Bilderfassungsvorrichtung auf Basis einer Kommunikation mit einem ersten Client, der von einem ersten Bediener zum Bedienen der ersten Arbeitsmaschine verwendet wird, erfasst werden und die eine Aktionsweise und eine Umgebungsänderungsweise der ersten Arbeitsmaschine darstellen, und des Veranlassens, dass eine Zeitreihe von Arbeitsumgebungsbildern, die den aufgenommenen Bildern entsprechen, in einer Datenbank kumulativ gespeichert und aufbewahrt wird, und
Ausführen eines zweiten Unterstützungsverfahrens des Veranlassens einer Ausgabeschnittstelle eines zweiten Clients, eine Zeitreihe von designierten Arbeitsumgebungsbildern, die über eine Eingabeschnittstelle des zweiten Clients designiert sind, auf Basis der Kommunikation mit dem zweiten Client aus Zeitreihen von Arbeitsumgebungsbildern auszugeben, die in der Datenbank gespeichert und aufbewahrt sind, und des Veranlassens der Ausgabeschnittstelle des zweiten Clients, eine Zeitreihe von Simulationsbildern auszugeben, die eine Aktionsweise und eine Umgebungsänderungsweise einer zweiten Arbeitsmaschine an einem virtuellen Arbeitsplatz darstellen, wobei die Aktionsweise und die Umgebungsänderungsweise einer Simulationsbedienung durch einen zweiten Bediener durch eine Eingabeschnittstelle des zweiten Clients entsprechen, und zwar basierend auf einem Arbeitsumgebungsbild zu einem designierten Zeitpunkt in der Zeitreihe der designierten Arbeitsumgebungsbilder, der durch die Eingabeschnittstelle des zweiten Clients designiert ist.

## Revendications

1. Serveur d'aide au travail (10) destiné à aider à l'amélioration d'une technique d'actionnement d'une machine de travail par un opérateur en fonction d'une communication avec un client, le serveur d'aide au travail comprenant :
un premier élément de traitement d'aide (121) configuré pour reconnaître une série chronologique d'images capturées qui sont acquises par l'intermédiaire d'un dispositif de capture d'images (412) coopérant avec une première machine de travail sur la base d'une communication avec un premier client utilisée par un premier opérateur pour actionner la première machine de travail et qui représentent un mode d'action et un mode de changement d'environnement de la première machine de travail et qui est configuré pour amener une série chronologique d'images d'environnement de travail correspondant aux images capturées à être stockées de manière accumulative et conservées dans une base de données ; et
un second élément de traitement d'aide (122) qui est configuré pour amener une interface de sortie d'un second client à émettre une série chronologique d'images d'environnement de travail désignées, qui sont désignées par l'intermédiaire d'une interface d'entrée du second client, parmi des séries chronologiques des images d'environnement de travail qui sont stockées et conservées dans la base de données sur la base d'une communication avec le second client et qui est configuré pour amener l'interface de sortie du second client à émettre une série chronologique d'images de simulation qui représentent un mode d'action et un mode de changement d'environnement d'une seconde machine de travail sur un site de travail virtuel, le mode d'action et le mode de changement d'environnement correspondant à une opération de simulation par un second opérateur par l'intermédiaire de l'interface d'entrée (210) du second client,
sur la base d'une image d'environnement de travail à un point temporel désigné, qui est désigné par l'interface d'entrée du second client, dans la série chronologique des images d'environnement de travail désignées.

2. Serveur d'aide au travail selon la revendication 1, dans lequel
le second élément de traitement d'aide est configuré pour amener l'interface de sortie du second client à émettre des séries chronologiques tout en superposant les séries chronologiques des images de simulation sur une série chronologique désignée qui est postérieure au point temporel désigné, dans la série chronologique des images d'environnement de travail désignées.

3. Serveur d'aide au travail selon la revendication 2, dans lequel,
dans le cas où une différence entre le mode d'action de la première machine de travail, qui est représenté par la série chronologique désignée des images de l'environnement de travail désignées, et le mode d'action de la seconde machine de travail, qui est représenté par la série chronologique des images de simulation, dépasse une valeur seuil, le second élément de traitement d'aide est configuré pour amener l'interface de sortie du second client à émettre des informations pour confirmer si oui ou non la reprise de l'opération de simulation de la seconde machine de travail est nécessaire.

4. Serveur d'aide au travail selon l'une quelconque des revendications 1 à 3, dans lequel
le premier élément de traitement d'aide est configuré pour reconnaître une série chronologique d'un état de fonctionnement d'un premier mécanisme d'actionnement qui configure le premier client sur la base d'une communication avec le premier client, et
sur la base de la communication avec le second client, le second élément de traitement d'aide est configuré pour amener un état de fonctionnement d'un second mécanisme d'actionnement qui configure le second client à un point temporel de début de l'opération de simulation de la seconde machine de travail à correspondre à l'état de fonctionnement du premier mécanisme d'actionnement à un point temporel qui correspond à l'image d'environnement de travail désignée.

5. Système d'aide au travail comprenant :
le serveur d'aide au travail selon l'une quelconque des revendications 1 à 4 ;
le premier client ; et
le second client.

6. Procédé d'aide au travail destiné à aider à l'amélioration d'une technique d'actionnement d'une machine de travail par un opérateur sur la base d'une communication avec un client, le procédé d'aide au travail comprenant :
l'exécution d'un premier processus d'aide consistant à reconnaître une série chronologique d'images capturées qui sont acquises par l'intermédiaire d'un dispositif de capture d'images coopérant avec une première machine de travail sur la base d'une communication avec un premier client utilisée par un premier opérateur pour actionner la première machine de travail et qui représentent un mode d'action et un mode de changement d'environnement de la première machine de travail et à amener une série chronologique d'images de l'environnement de travail qui correspondent aux images capturées à être stockées de manière accumulative et conservées dans une base de données ; et
l'exécution d'un second processus d'aide consistant à amener une interface de sortie d'un second client à émettre une série chronologique d'images d'environnement de travail désignées, qui sont désignées par l'intermédiaire d'une interface d'entrée du second client, parmi les séries chronologiques des images de l'environnement de travail qui sont stockées et conservées dans la base de données en fonction de la communication avec le second client et à amener l'interface de sortie du second client à émettre une série chronologique d'images de simulation qui représentent un mode d'action et un mode de changement d'environnement d'une seconde machine de travail sur un site de travail virtuel, le mode d'action et le mode de changement d'environnement correspondant à une opération de simulation effectuée par un second opérateur par l'intermédiaire d'une interface d'entrée du second client, sur la base d'une image d'environnement de travail à un point temporel désigné, qui est désigné par l'intermédiaire d'une interface d'entrée du second client, dans la série chronologique des images d'environnement de travail désignées.
